# EUROPEAN PATENT SPECIFICATION

(11) **EP 1 414 222 B1**
(45) Date of publication and mention of the grant of the patent: **19.05.2010**
(21) Application number: 03024450.3
(22) Date of filing: 23.10.2003
(51) Int. Cl.: H04M 1/22

(54) **Portable terminal device**
Tragbares Endgerät
Terminal portable

(30) Priority: 24.10.2002 JP 2002309729
(43) Date of publication of application: 28.04.2004
(73) Proprietor: NEC CORPORATION, Tokyo (JP)
(72) Inventor: Sakaguchi, Katsuya, Tokyo (JP)
(74) Representative: Glawe, Delfs, Moll

(56) References cited:
- WO-A-01/05125
- DE-A- 19 918 053
- US-B1- 6 435 690
- PATENT ABSTRACTS OF JAPAN vol. 2002, no. 09, 4 September 2002 (2002-09-04) & JP 2002 152358 A (TSUGEKAWA MITSUKO), 24 May 2002 (2002-05-24)
- PATENT ABSTRACTS OF JAPAN vol. 2000, no. 21, 3 August 2001 (2001-08-03) & JP 2001 103141 A (NEC SAITAMA LTD), 13 April 2001 (2001-04-13)
- PATENT ABSTRACTS OF JAPAN vol. 2003, no. 01, 14 January 2003 (2003-01-14) & JP 2002 252687 A (SHARP CORP), 6 September 2002 (2002-09-06)

## Description

### BACKGROUND OF THE INVENTION

### 1. Field of the Invention

The present invention relates to a portable terminal device, and specifically relates to a portable terminal device which emits light, which is outputted from its light emitting section, to the outside of its case.

### 2. Description of the Related Prior Art

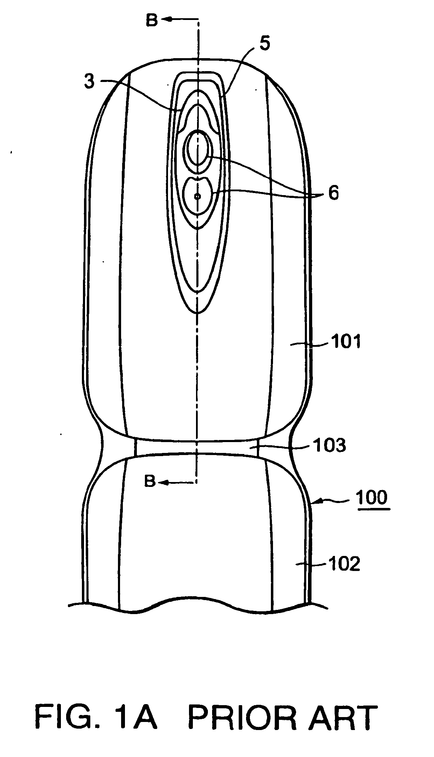

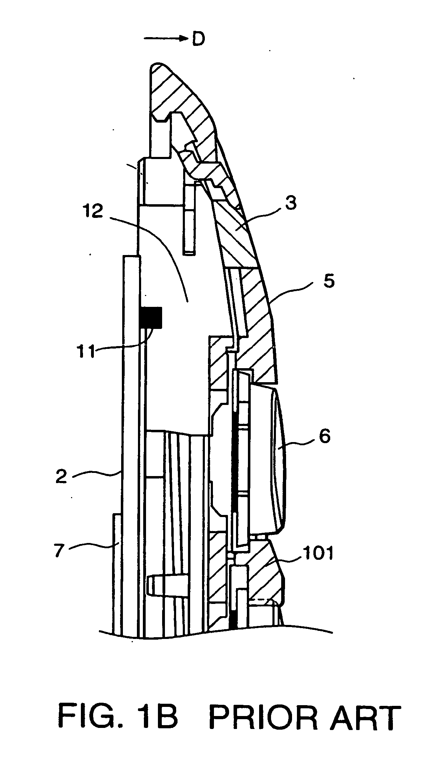

In recent years, a mobile phone is in widespread use, which includes a light emitting section within a case and causes a light emitting element to emit light to inform a user of, for example, call arrival. This type of mobile phone has hitherto included a three-color LED of surface emitting type and a creamy white (half-transparent) lens facing a light emitting surface of the three-color LED. When a call arrives, a plurality of colors of light can be emitted from this lens. FIGS. 1A and 1B are a plan view showing a folding type mobile phone and an enlarged cross-sectional view showing the same (along a line B-B in FIG. 1A), respectively. The folding type mobile phone 100 includes a display case 101 having a liquid crystal display section, a body 102 having an operation section, and a hinge section 103 connecting the display case 101 to the body 102. The display case 101 includes a printed circuit board 2. A liquid crystal display 7 is arranged on a side of the printed circuit board 2. A surface emitting three-color LED 11 is mounted on the other side. This LED 11 is a surface emitting LED which includes a light emitting surface on the opposite side to the printed circuit board 2. Accordingly, the light emitting surface substantially faces an emblem 5 and a creamy white lens 3. A color mixing space section 12 is arranged between the surface emitting three-color LED 11 and the creamy white lens 3. The creamy white lens 3 forms a part of the case, and is composed of resin such as acrylic or polycarbonate resin. Control buttons 6 are used for, for example, volume control.

When the mobile phone 101 receives a call, the surface emitting three-color LED 11 on the printed circuit board 2 emits light beams to inform arrival of the call. The surface emitting three-color LED 11 includes three LEDs each emitting a red, green, or blue light beam, and can produce up to seven colors of light by turning on and off each LED. The light beams from the surface emitting three-color LED 11 are emitted in a vertical direction to the surface of the printed circuit board 2, namely, in a direction indicated by an arrow D in FIG. 1B. These light beams are mixed in a color mixing space section 12 and emitted to the outside of the case through the creamy white lens 3. However, in the above mentioned mobile phone, in order to sufficiently mix the light beams emitted from the LED 11, the light emitting surface of the LED 11 and the creamy white lens 3 must be arranged to be spaced a predetermined distance apart. Accordingly, the case of the mobile phone must be made thick.

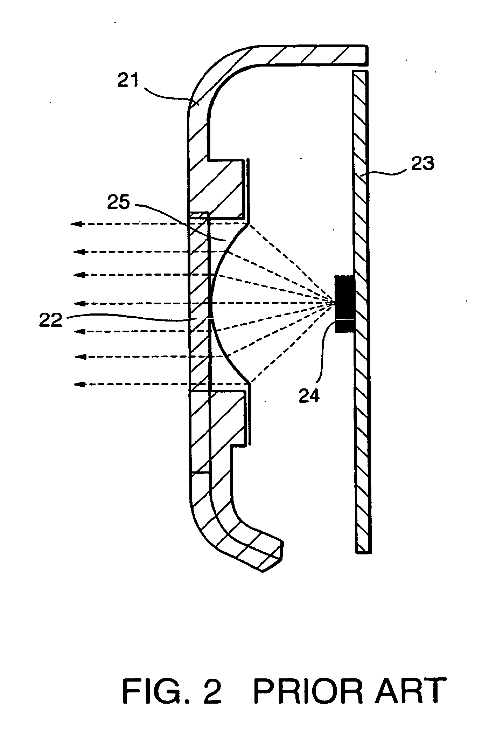

Referring to FIG. 2, a mobile phone disclosed in Japanese Patent Laid-Open No. 2002-252687 includes a surface emitting LED 24, a light refractor sheet 25, and a window 22. The surface emitting LED 24 is mounted on a printed circuit board 23. The light refractor sheet 25 and the window 22 are arranged at the front of the light emitting surface of the LED 24. The window 22 forms a part of the mobile phone case 21. The light refractor sheet 25 is arranged between the LED 24 and the window 22. The light rays emitted from the LED 24 are refracted by the light refractor sheet 25 to be substantially parallel and incident on the transparent window 22 substantially at right angles. Therefore, the light rays are emitted from the window 22 with homogeneous illumination. However, when the area of the window 22 is increased, it is required to increase the interval between the LED 24 and the window 22. Accordingly, it is required to increase the thickness of the mobile phone case like the aforementioned example, and sufficient luminance cannot be obtained.

A portable terminal device according to the preamble part of claim 1 is known from DE-A-199 18 053.

### SUMMARY OF THE INVENTION

It is an object of the present invention to provide a portable terminal device in which the thickness is decreased and sufficient luminance can be obtained.

This object is solved by the features of the main claim.

Advantageous embodiments are mentioned in the subclaims.

### BRIEF DESCRIPTION OF THE DRAWINGS

The above and other objects, features and advantages of the present invention will become apparent from the following detailed description when taken with the accompanying drawings in which:
FIGS. 1A and 1B show an example of a conventional mobile phone, which are a plan view and an enlarged cross-sectional view, respectively;
FIG. 2 is an enlarged cross-sectional view showing another example of the conventional mobile phone;
FIG. 3 is an enlarged cross-sectional view showing an embodiment of a mobile phone of the present invention; and
FIG. 4 is an enlarged cross-sectional view showing another embodiment of the mobile phone of the present invention.

### DETAILED DESCRIPTION OF THE PREFERRED EMBODIMENTS

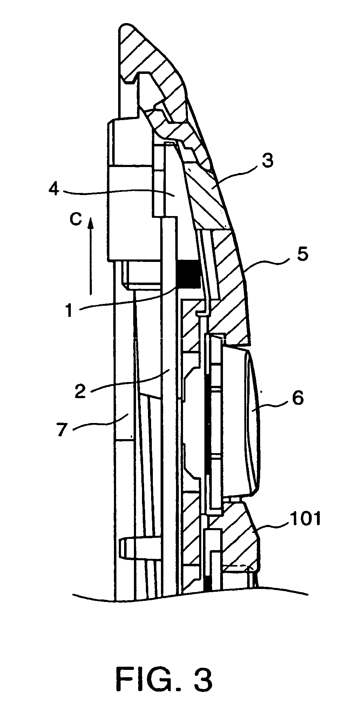

An embodiment of a mobile phone will be described below. Referring to FIG. 3, a display case 101 of a folding type mobile phone includes a creamy white lens 3, a decorative emblem 5, a control button 6, and a liquid crystal display section 7 on the outer surface thereof. The case 101 includes a three-color light emitting diode (LED) 1 of side emitting type, a printed circuit board 2, and a color mixing space section 4 inside thereof. When the mobile phone is folded, the liquid crystal display section 7 is accommodated within the mobile phone. The printed circuit board 2 is arranged in a direction substantially same as that of the liquid crystal display section 7 along the case surface on which the creamywhite lens 3 and the like are arranged. The LED 1 is mounted on the printed circuit board 2, and the light emitting surface thereof is directed in the direction of the board surface. Accordingly, the LED 1 mainly emits light along the board surface (in a direction of C in FIG. 3). The color mixing space section 4 is formed in a flat shape in the vicinity of the end of the printed circuit board 2 . The light emitted from the LED1 enters into this color mixing space section 4. The LED 1 includes three LEDs each emitting a red, green, or blue light beam. Accordingly, the LED 1 can provide up to seven colors of light by combinations of the LEDs turned on/off . These three LEDs are arranged in a linear or triangular fashion on the light emitting surface of the LED 1. The distance between the three LEDs is, for example, about 0.4 mm. The plurality of light beams emitted from the LED 1 are mixed in this space 4 to change into another color. The light is emitted from this space section 4 through the translucent creamy white lens 3 to the outside of the case 101. The creamy white lens 3 is composed of resin such as acrylic or polycarbonate resin and shaped like a boomerang, for example, as shown in FIG. 1A.

When the mobile phone 101 receives a call, the side emitting type three-color LED 1 on the printed circuit board 2 emits light to inform a user of arrival of the call. The light emitting surface of the LED 1 is directed to the color mixing space section 4. Since each light beam emitted from the LED 1 is spread to some extent, the plurality of light beams are mixed in the color mixing space section 4. The light beams of three colors are mixed to be white. The light emitting surface of the LED 1 is directed to the direction of the surface of the printed circuit board 2, and the creamy white lens 3 is arranged substantially along the surface of the printed circuit board 2. Accordingly, the center part of each emitted light beam does not directly strike the creamy white lens 3. In the mobile phone shown in FIG. 3, the color mixing space section 4 is located comparatively far from the light emitting surface of the side emitting type three-color LED 1, so that the colors can be adequately mixed. Moreover, since the creamy-white lens 3 is located in the vicinity of the space 4, uniform luminance can be provided over the entire creamy white lens 3. Furthermore, in the above embodiment, since the color mixing space section 4 is a flat space, high luminance light is emitted from the creamy white lens 3, so that the mobile phone case can be made thinner. It is noted that the LED 1 can be controlled to emit light at a time other than that of call arrival.

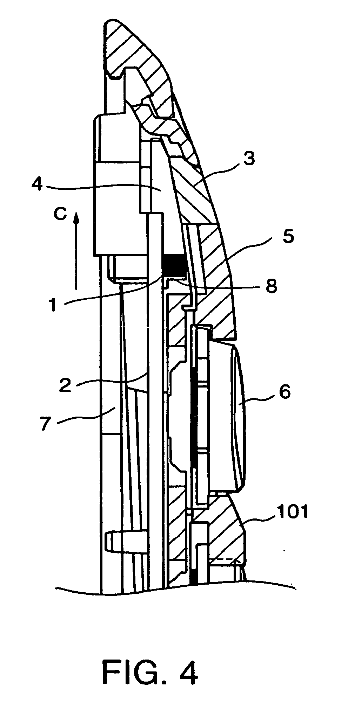

Referring to FIG. 4, another embodiment of the mobile phone is shown. In this embodiment, a sub-board 8 is mounted on the printed circuit board 2, and a surface emitting light emitting diode (LED) 11 is attached to this sub-board 8. In this LED 11, a surface opposite to an electrode surface is the light emitting surface. Similar to the aforementioned embodiment, the light emitting surface of the LED 11 is directed in the direction along the surface of the printed circuit board. Accordingly, the LED 11 mainly emits light along the surface of the printed circuit board (in a direction of C in FIG. 4).

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the scope of the following claims.

## Claims

1. A portable terminal device including a light emitting section in a case thereof, comprising:
a flat vacant space (4) section formed in the case (101); and
a translucent member (3) formed in a surface of the case, through which light emitted from the light emitting section is transmitted,
***characterized in that***
the light emitting section has a light emitting surface directed in a direction parallel or nearly parallel to the translucent member (3);
that the translucent member (3) is arranged substantially along a surface of a wiring board (2) located in the case (101); and
that the light emitting section that emits one or more warning lights has at least three LEDs (1) for emitting a red light, a green light and a blue light respectively.

2. The portable terminal device according to claim 1, wherein the light emitting section is attached to the wiring board.

3. The portable terminal device according to claim 1, wherein the light emitting section is a light emitting diode of side emitting type.

4. The portable terminal device according to claim 1, wherein the light emitting section is a light emitting diode of surface emitting type.

5. The portable terminal device according to claim 1, wherein the window section is creamy white.

6. The portable terminal device according to claim 1, wherein the light emitting section emits light when a call arrives at the portable terminal device.

## Patentansprüche

1. Tragbare Endgerätvorrichtung, die einen Licht emittierenden Abschnitt in einem Gehäuse davon einschließt und umfasst:
einen flachen Leerraumabschnitt (4), der in dem Gehäuse (101) gebildet ist; und
ein lichtdurchlässiges Element (3), das in einer Oberfläche des Gehäuses gebildet ist, durch welches Licht, das von dem Licht emittierenden Abschnitt emittiert wird, durchgelassen wird,
**dadurch gekennzeichnet, dass**
der Licht emittierende Abschnitt eine Licht emittierende Oberfläche aufweist, die in einer Richtung parallel oder annähernd parallel zu dem lichtdurchlässigen Element (3) gerichtet ist;
dass das lichtdurchlässige Element (3) im Wesentlichen entlang einer Oberfläche einer Leiterplatte (2), die in dem Gehäuse (101) angeordnet ist, angeordnet ist; und
dass der Licht emittierende Abschnitt, der ein oder mehrere Warnlichter emittiert, mindestens drei LEDs (1) zum Emittieren von rotem Licht, grünem Licht bzw. blauem Licht aufweist.

2. Tragbare Endgerätvorrichtung gemäß Anspruch 1, wobei der Licht emittierende Abschnitt an der Leiterplatte angebracht ist.

3. Tragbare Endgerätvorrichtung gemäß Anspruch 1, wobei der Licht emittierende Abschnitt eine Licht emittierende Diode vom Seiten-emittierenden Typ ist.

4. Tragbare Endgerätvorrichtung gemäß Anspruch 1, wobei der Licht emittierende Abschnitt eine Licht emittierende Diode vom Oberflächenemittierenden Typ ist.

5. Tragbare Endgerätvorrichtung gemäß Anspruch 1, wobei der Fensterabschnitt cremeweiß ist.

6. Tragbare Endgerätvorrichtung gemäß Anspruch 1, wobei der Licht emittierende Abschnitt Licht emittiert, wenn ein Anruf an der tragbaren Endgerätvorrichtung ankommt.

## Revendications

1. Dispositif terminal portable comportant une section d'émission de lumière dans son boîtier, comprenant :
une section d'espace libre plat (4) formée dans le boîtier (101) ; et
un élément translucide (3) formé dans une surface du boîtier, à travers lequel la lumière émise par la section d'émission de lumière est transmise,
**caractérisé en ce que** :
la section d'émission de lumière a une surface d'émission de lumière dirigée dans une direction parallèle ou presque parallèle à l'élément translucide (3) ;
**en ce que** l'élément translucide (3) est agencé sensiblement le long d'une surface d'un tableau de connexions (2) situé dans le boîtier (101) ; et
**en ce que** la section d'émission de lumière qui émet une ou plusieurs lumières d'avertissement a au moins trois diodes électroluminescentes (1) pour émettre une lumière rouge, une lumière verte et une lumière bleue, respectivement.

2. Dispositif terminal portable selon la revendication 1, dans lequel la section d'émission de lumière est fixée sur le tableau de connexions.

3. Dispositif terminal portable selon la revendication 1, dans lequel la section d'émission de lumière est une diode d'émission de lumière du type à émission latérale.

4. Dispositif terminal portable selon la revendication 1, dans lequel la section d'émission de lumière est une diode d'émission de lumière du type à émission de surface.

5. Dispositif terminal portable selon la revendication 1, dans lequel la section de fenêtre est blanc cassé.

6. Dispositif terminal portable selon la revendication 1, dans lequel la section d'émission de lumière émet de la lumière lorsqu'un appel arrive sur le dispositif terminal portable.
